# EUROPÄISCHE PATENTSCHRIFT

(11) **EP 2 024 441 B1**
(45) Veröffentlichungstag und Bekanntmachung des Hinweises auf die Patenterteilung: **04.11.2009**
(21) Anmeldenummer: 07712351.1
(22) Anmeldetag: 28.02.2007
(51) Int. Cl.: C08L 101/00, C08K 5/00

(54) **VERWENDUNG VON POLYVINYLACETALEN ALS LOW-PROFILE-ADDITIV**
USE OF POLYVINYL ACETALS AS A LOW-PROFILE ADDITIVE
UTILISATION DE POLYVINYLACETALES EN TANT QU'ADDITIF DE BAS PROFIL

(30) Priorität: 16.03.2006 DE 102006012200
(43) Veröffentlichungstag der Anmeldung: 18.02.2009
(73) Patentinhaber: Kuraray Europe GmbH, 65926 Frankfurt am Main (DE)
(72) Erfinder: GRÄWE, René, 84034 Landshut (DE); LEHMANN, Thomas, 93161 Sinzing (DE)
(74) Vertreter: Kisters, Michael Marcus
(86) Internationale Anmeldenummer: PCT/EP2007/051862
(87) Internationale Veröffentlichungsnummer: WO 2007/104639

(56) Entgegenhaltungen:
- DE-A1-102004 031 970
- DE-A1-102005 023 405

## Beschreibung

Die Erfindung betrifft die Verwendung von Polyvinylacetalen als Low-Profile-Additiv.

Bei der Herstellung von flächigen Kunststoffteilen werden häufig ungesättigte Polyesterharz-Zusammensetzungen (UP-Harze) eingesetzt. Diese Polyesterharze sind Reaktionsprodukte einer Dicarbonsäure oder eines Dicarbonsäureanhydrids mit einem Polyol. Derartige Polyesterharz-Zusammmensetzungen enthalten auch ein Monomeres mit ethylenisch ungesättigten Gruppen, im allgemeinen Styrol. Styrol wird der Polyesterharz-Zusammensetzung zugegeben um den Polyester zu lösen und sicherzustellen, dass die Polyesterzusammensetzun eine fließbare Masse ist. Zur Verstärkung der mit der Polyesterharz-Zusammensetzung erhaltenen Kunststoffteile enthalten die Polyesterharz-Zusammensetzungen noch Fasermaterialien wie Glasfaser, Carbonfaser oder entsprechende Fasermatten.

Problematisch bei der Verarbeitung solcher Polyesterharz-Zusammensetzungen (Fiber Reinforced Plastic composites = FPR composites) ist der Volumenschwund während der Wärmehärtung des Polyesterharzes. Zur Reduzierung des Schrumpfs bei der Aushärtung des Polyesterharzes werden diesem daher sogenannte Low-Profile-Additive zugegeben. Das Low-Profile-Additiv reduziert das Schrumpfen beim Aushärten, baut Eigenspannungen ab, verringert Mikrorissbildung, und erleichtert die Einhaltung von Fertigungstoleranzen. Bei den Low-Profile-Additiven handelt es sich um Thermoplaste wie Polystyrol, Polymethylmethacrylat und insbesondere Polyvinylacetat, welche häufig noch carboxylfunktionelle Comonomereinheiten enthalten.

Nachteilig bei den bisher verwendeten Low-Profile-Additiven ist, dass diese bei pigmentierten Composite-Bauteilen zu einer Marmorierung der Oberfläche der Bauteile führen. Daher müssen die Bauteile überlackiert werden.

Vor diesem Hintergrund bestand die Aufgabe, Low-Profile-Additive zur Verfügung zu stellen, welche zu einer effektiven Reduzierung des Schwundmaßes führen und dabei eine bessere Pigmentierung der Bauteile bewirken.

Gegenstand der Erfindung ist die Verwendung von Polyvinylacetalen als Low-Profile-Additiv.

Als Polyvinylacetale werden solche eingesetzt, welche ausgehend von Polyvinylacetat dadurch erhalten werden, dass das Polyvinylacetat bis zu einem Hydrolysegrad von ≥ 50 Mol-% hydrolisiert wird und anschließend mit einem oder mehreren aliphatischen oder aromatischen Aldehyden mit 1 bis 15 C-Atomen acetalisiert wird.

Die Herstellung der Polyvinylacetale erfolgt nach dem Fachmann bekannten Verfahren. Als Ausgangsmaterialien bevorzugt werden Vinylacetat-Homopolymerisate oder Copolymerisate mit einem oder mehreren Monomeren aus der Gruppe umfassend ethylenisch ungesättigte Mono- und Dicarbonsäuren, beispielsweise Acrylsäure, Methacrylsäure, Crotonsäure und Maleinsäure. Falls von Vinylacetat-Copolymerisaten ausgegangen wird, enthalten diese vorzugsweise 0,1 bis 10 Gew.-% carboxylfunktionelle Comonomereinheiten.

Diese Vinylacetat-Polymerisate können in bekannter Weise mittels Polymerisation hergestellt werden; vorzugsweise durch Substanzpolymerisation, Suspensionspolymerisation oder durch Polymerisation in organischen Lösungsmitteln, besonders bevorzugt in alkoholischer Lösung. Geeignete Lösungsmittel und Regler sind beispielsweise Methanol, Ethanol, Propanol, Isopropanol. Die Polymerisation wird unter Rückfluß bei einer Temperatur von 50°C bis 100°C durchgeführt und durch Zugabe gängiger Initiatoren radikalisch initiiert. Beispiele für gängige Initiatoren sind Percarbonate wie Cyclohexylperoxi-dicarbonat oder Perester wie t-Butylperneodecanoat oder t-Butylperpivalat. Die Einstellung des Molekulargewichts kann in bekannter Weise durch Zugabe von Regler, durch den Lösungsmittelgehalt, durch Variation der Initiatorkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylacetat-Polymerisate erfolgt in an sich bekannter Weise, zum Beispiel nach dem Band- oder Kneterverfahren, im Alkalischen oder Sauren unter Zugabe von Säure oder Base. Vorzugsweise wird das Vinylester-Festharz in Alkohol, beispielweise Methanol, unter Einstellen eines Feststoffgehalts von 15 bis 70 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 30°C bis 70°C durchgeführt. Nach Abschluß der Hydrolyse wird das Lösungsmittel abdestilliert und der Polyvinylalkohol wird als Pulver erhalten. Der Polyvinylalkohol kann aber auch durch eine sukzessive Zugabe von Wasser, während das Lösungsmittel abdestilliert wird, als wässrige Lösung gewonnen werden.

Die damit erhaltenen teil- oder vollverseiften Vinylesterpolymerisate haben einen Hydrolysegrad von vorzugsweise ≥ 50 Mol-%, besonders bevorzugt 70 bis 100 Mol-%, am meisten bevorzugt 95 bis 100 Mol-%.

Zur Acetalisierung werden die teil- oder vollverseiften Polyvinylacetate vorzugsweise in wässrigem Medium aufgenommen. Die Acetalisierung erfolgt in Gegenwart von sauren Katalysatoren wie Salzsäure, Schwefelsäure, Salpetersäure oder Phosphorsäure. Vorzugsweise wird durch Zugabe von 20 %-iger Salzsäure der pH-Wert der Lösung auf Werte < 1 eingestellt. Nach Zugabe des Katalysators wird die Lösung auf vorzugsweise -10°C bis +5°C abgekühlt. Die Acetalisierungsreaktion wird durch Zugabe des Aldehydanteils gestartet.

Bevorzugte Aldehyde aus der Gruppe der aliphatischen und aromatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration und nachgeschaltetem Waschschritt isoliert.

Die Polyvinylacetale besitzen einen Acetalisierungsgrad von 1 bis 90 Mol-%, vorzugsweise 45 bis 90 Mol-%. Bevorzugt sind Polyvinylbutyrale. Am meisten bevorzugt sind Polyvinylbutyrale mit 75 bis 87 Gew-% Vinylbutyral-Einheiten, 10 bis 25 Gew.-% Vinylalkohol-Einheiten und 0 bis 5 Gew.-% Vinylacetat-Einheiten.

Für die Anwendung als Low-Profile-Additiv werden die Polyvinylacetale im allgemeinen in Styrol gelöst und gegebenenfalls mit weiteren Additiven wie Füllstoffen, Verdickern, Initiatoren und Verarbeitungshilfsmitteln appliziert. Die Polyvinylacetale können auch in Kombination mit herkömmlichen Low-Profile-Additiven verwendet werden. Beispielsweise in Kombination mit Polyvinylacetat, carboxylfunktionellen Polyvinylacetaten und Polymethylmethacrylat.

Die Polyvinylacetale eignen sich als Low-Profile-Additiv für alle gängige Herstellungsverfahren von FRP Composites, wie Sheet Molding Compound Technology (SMC), Bulk Molding Compound Technology (BMC), Resin Transfer Molding (RTM), Resin Injection Molding (RIM). Die Zusammensetzung der Rezepturen sowie die Einsatzmengen der Low-Profile-Additive hängen von dem gewählten Herstellungsverfahren ab und sind dem Fachmann bekannt. Im allgemeinen wird das Polyvinylacetal in einer 10 bis 50 Gew.-%-igen Lösung in Styrol appliziert. Die Einsatzmenge beträgt im allgemeinen 5 bis 50 Gew.-Teile, vorzugsweise 30 bis 40 Gew.-Teile der Lösung, bezogen auf die Gesamtrezeptur.

Die nachfolgenden Beispiele dienen zur weiteren Erläuterung der Erfindung:

| **Type** | **Rohstoff** | **Gew.-T.** |
|---|---|---|
| Palapreg P 18-03 | UP-Harz (34,5 % in Styrol) | 65,5 |
| LPAX | LPA(40 % in Styrol) | 30,0 |
| Styrol | Monostyrol | 4,5 |
| Trigonox^{®} C | tert.Butylperoxy-benzoat | 1,5 |
| Byk^{®}-W 996 | Netz- und Dispergieradditiv | 2,9 |
| p-Benzochinon | Inhibitor (10 % in MMA) | 0,7 |
| Akzo Nobel NL-49 | Beschleuniger (1 % Co in Ester) | 1,1 |
| Byk^{®}-9076 | Netz- und Dispergieradditiv | 0,5 |
| Ruß 9257-45 | Farbpaste schwarz | 10,0 |
| Millicarb^{®} OG | Kreide (CaCO₃) | 200,0 |
| Zwischensumme | | 316,7 |
| Luvatol^{®} MK35 | Eindickungsmittel(35% MgO in UP) | 1,5 |
| Vetrotex P204 | Glasfaser | 85,9 |

Als Low-Profile-Additive wurden eingesetzt:
LPA1 (Vergleich):
   Carboxylfunktionelles Polyvinylacetat-Festharz
LPA2:
   Polyvinylbutyral mit 84 Gew.-% Vinylbutyral-, 15 Gew.-% Vinylalkohol- und 1 Gew.-% Vinylacetat-Einheiten.

Aus den in der Tabelle aufgeführten Rohstoffen wurde eine Paste geknetet. Kurz vor der Verarbeitung wurde noch Luvatol MK 35, ein Verdicker, eingerührt. Danach wurde mit der Paste und mit den Glasfasern ein Handlaminat erstellt und zu einem SMC verarbeitet. Das Produkt wurde 3 Tage bei 20°C und 50 % Raumfeuchte gelagert. Danach wurde es bei 160°C in einer gängigen SMC-Presse zu einem Bauteil gepreßt.

Der Schrumpf wurde nach dem Erkalten der Presse ermittelt und die Volumenänderung in Prozent bestimmt. Minuswerte zeigen an, dass das Bauteil größer als die ursprüngliche Form war.

**Tabelle 1:**

| | **x** | | | | | **y** | | | | |
|---|---|---|---|---|---|---|---|---|---|---|
| | **Abmaß** | **Länge** | | **Schrumpf** | | **Abmaß** | **Länge** | | **Schrumpf** | |
| LPAX | **[mm]** | **[mm]** | α [µ/µK] | **[‰]** | σ | **[mm]** | **[mm]** | α [µ/µK] | **[‰]** | σ |
| LPA1 | 0,397 | 457,392 | 9,04E-06 | -0,42 | 0,016 | 0,456 | 457,451 | 8,01E-06 | -0,55 | 0,02 |
| LPA2 | 0,309 | 457,304 | 1,06E-05 | -0,23 | 0,018 | 0,375 | 457,370 | 9,42E-06 | -0,37 | 0,03 |

Wie aus der Tabelle 1 ersichtlich ist die Wirkung von Polyvinylbutyral als LPA mit der von herkömmlichem, carboxylfunktionellem Polyvinylacetat zu vergleichen. Beide bewirken in der Formulierung eine Expansion beim Verpressen.

### Pigmentierbarkeit:

Der Grad der Pigmentierbarkeit kann nur optisch im Vergleich zu einer Referenz beurteilt werden. Als Referenz dient ein Polystrol-Muster, welches eine gute Pigmentierung erlaubt, aber keine Expansion in der Formulierung zeigt.

| **Muster** | **Bewertung (1-6) 1= bestes** |
|---|---|
| Polystyrol | 1 |
| LPA 1 (Vergleich) | 6 |
| LPA 2 | 3 |

Polyvinylbutyral zeigt im Vergleich zum carboxylierten Polyvinylacetat-Festharz eine deutlich verbesserte Pigmentierung.

## Patentansprüche

1. Verwendung von Polyvinylacetalen als Low-Profile-Additiv, wobei als Polyvinylacetale solche eingesetzt werden, welche ausgehend von Polyvinylacetat **dadurch** erhalten werden, dass das Polyvinylacetat bis zu einem Hydrolysegrad von ≥ 50 Mol-% hydrolisiert wird und anschließend mit einem oder mehreren Aldehyden aus der Gruppe umfassend Formaldehyd, Acetaldehyd, Propionaldehyd und Butyraldehyd acetalisiert wird.

2. Verwendung nach Anspruch 1, wobei als Polyvinylacetale solche eingesetzt werden, welche mittels Acetalisierung mit Acetaldehyd, Butyraldehyd oder deren Gemischen erhalten werden.

3. Verwendung nach Anspruch 1 bis 2, wobei Polyvinylbutyrale verwendet werden.

4. Verwendung nach Ansprüche 3, wobei Polyvinylbutyrale mit 75 bis 87 Gew-% Vinylbutyral-Einheiten, 10 bis 25 Gew.-% Vinylalkohol-Einheiten und 0 bis 5 Gew.-% Vinylacetat-Einheiten verwendet werden.

5. Verwendung nach Anspruch 1 bis 4, wobei die Polyvinylbutyrale in Kombination mit anderen Low-Profile-Additiven verwendet werden.

6. Verwendung nach Anspruch 1 bis 5, **dadurch gekennzeichnet, dass** die Polyvinylacetale als Low-Profile-Additiv in Herstellungsverfahren für FRP-Composites gemäß Sheet Molding Compound Technology (SMC), Bulk Molding Compound Technology (BMC), Resin Transfer Molding (RTM), Resin Injection Molding (RIM) verwendet werden.

## Claims

1. The use of polyvinyl acetals as low profile additive, where polyvinyl acetals are used which are obtained, starting with polyvinyl acetate, by hydrolyzing the polyvinyl acetate to a degree of hydrolysis of ≥ 50 mol% and subsequently acetalyzing it with one or more aldehydes from the group comprising formaldehyde, acetaldehyde, propionaldehyde, and butyraldehyde.

2. The use according to claim 1, where the polyvinyl acetals are obtained by means of acetalization with acetaldehyde, butyraldehyde, or mixtures thereof are used as polyvinyl acetals.

3. The use according to claim 1 to 2, where polyvinyl butyrals are used.

4. The use according to claim 3, where polyvinyl butyrals with 75 to 87% by weight of vinyl butyral units, 10 to 25% by weight of vinyl alcohol units, and 0 to 5% by weight of vinyl acetate units are used.

5. The use according to claim 1 to 4, where the polyvinyl butyrals are used in combination with other low profile additives.

6. The use according to claim 1 to 5, **characterized in that** the polyvinyl acetals are used as low profile additive in production methods for FRP composites according to Sheet Molding Compound Technology (SMC), Bulk Molding Compound Technology (BMC), Resin Transfer Molding (RTM), Resin Injection Molding (RIM).

## Revendications

1. Utilisation d'acétals de polyvinyle comme additif anti-retrait, les acétals de polyvinyle mis en oeuvre étant obtenus à partir d'acétate de polyvinyle en hydrolysant ledit acétate de polyvinyle jusqu'à atteindre un degré d'hydrolyse de ≥ 50 mol.-% pour ensuite l'acétaliser avec un ou plusieurs aldéhydes issus du groupe comprenant le formaldéhyde, l'acétaldéhyde, le propionaldéhyde et le butyraldéhyde.

2. Utilisation selon la revendication 1, les acétals de polyvinyle mis en oeuvre étant obtenus par acétalisation avec de l'acétaldéhyde, du butyraldéhyde ou leurs mélanges.

3. Utilisation selon les revendications 1 à 2, les substances mises oeuvre étant des butyrals de polyvinyle.

4. Utilisation selon la revendication 3, les substances mises en oeuvre étant des butyrals de polyvinyle avec 75 à 87 % en poids d'unités de butyral de vinyle, 10 à 25 % en poids d'unités d'alcool vinylique et 0 à 5 % en poids d'unités d'acétate de vinyle.

5. Utilisation selon les revendications 1 à 4, les butyrals de polyvinyle étant utilisés en combinaison avec d'autres additifs anti-retrait.

6. Utilisation selon les revendications 1 à 5, **caractérisée en ce que** les acétals de polyvinyle sont utilisés comme additif anti-retrait dans des procédé de fabrication de matériaux composites GRP selon les technologies dites Sheet Molding Compound (SMC), Bulk Molding Compound (BMC), Resin Transfer Molding (RTM), Resin Injection Molding (RIM) .
